# EUROPÄISCHE PATENTANMELDUNG

(11) **EP 0 962 183 A1**
(43) Veröffentlichungstag der Anmeldung: **08.12.1999**
(21) Anmeldenummer: 99106971.7
(22) Anmeldetag: 09.04.1999
(51) Int. Cl.: A47L 15/46

(54) **Geschirrspülmaschine mit wenigstens einem Geschirrkorb und Verfahren zum Betreiben derselben**

(30) Priorität: 28.05.1998 DE 19823806
(71) Anmelder: AEG Hausgeräte GmbH, 90429 Nürnberg (DE)
(72) Erfinder: Fauth, Michael, 91785 Pleinfeld (DE)

(57) **Zusammenfassung**

Bei einer Geschirrspülmaschine mit wenigstens einem Geschirrkorb (3, 4), welcher mit zu reinigendem Spülgut beladbar ist, und mit mindestens einer Sprüheinrichtung (8, 9, 10), die während eines Spülprogrammes gesondert mit Spülflüssigkeit versorgbar ist, wobei eine ausschließliche Versorgung einer Teilmenge der Sprüheinrichtungen (8, 9, 10) während des Spülprogrammes einstellbar ist, ist wenigstens ein Sensor (30) vorgesehen, durch den eine Beladung eines Geschirrkorbes (3, 4) erkennbar ist. Bei einer so ausgebildeten Geschirrspülmaschine kann beispielsweise erkannt werden, wenn ausschließlich ein Geschirrkorb (3, 4) beladen ist. Dann kann automatisch ein Besprühen ausschließlich dieses Geschirrkorbes (3, 4) erfolgen, wobei der Zustand der ausschließlichen Beladung eines Geschirrkorbes (3, 4) nicht von einer Bedienperson eingegeben werden muß. Eine Fehlbedienung durch die Bedienperson ist somit vermieden.

## Beschreibung

Die Erfindung betrifft eine Geschirrspülmaschine mit wenigstens einem Geschirrkorb nach dem Oberbegriff des Anspruchs 1 und Verfahren zum Betreiben der Geschirrspülmaschine nach dem Oberbegriff des Anspruchs 6 und nach dem Oberbegriff des Anspruchs 10.

Eine Geschirrspülmaschine dieser Art ist aus der DE 44 34 235 C1 bekannt. Hierin ist eine Geschirrspülmaschine mit zwei Geschirrkörben offenbart, die für einen Spülvorgang mit Spülgut wahlweise einzeln oder gemeinsam beladbar sind. Wird nur ein Geschirrkorb beladen, so kann die Bedienperson eine Schaltmaßnahme vornehmen, durch die nur einer unter einem unteren der beiden übereinander angeordneten Geschirrkörbe befindlichen Sprüheinrichtung Spülflüssigkeit zuführbar ist. Wird in einem folgenden Spülvorgang eine Beladung beider Geschirrkörbe vorgenommen, so muß die Bedienperson sicherstellen, daß auch der obere Geschirrkorb mit Spülflüssigkeit beaufschlagt wird. Vergißt die Bedienperson, die Umstellung auf den jeweiligen Beladungszustand vorzunehmen, so unterbleibt bei der Beladung nur eines Geschirrkorbes ein gewünschter Einspareffekt der Spülflüssigkeit, während bei einer Beladung beider Geschirrkörbe und einem Besprühen nur eines Geschirrkorbes eine ungenügende Reinigung des im anderen Geschirrkorb angeordneten Spülgutes die Folge ist.

Es ist daher Aufgabe der Erfindung, eine Geschirrspülmaschine mit wenigstens einem Geschirrkorb und ein Verfahren zum Betreiben derselben anzugeben, bei der bzw. durch das die Bedienung vereinfacht und eine Fehlbedienung vermieden ist. Weiterhin ist es eine Aufgabe der Erfindung, eine Bedienperson auf einen verschlechterten Wirkungsgrad des Spülbetriebes bei einer reduzierten Beladung des Geschirrkorbes aufmerksam zu machen.

Die Lösung der Aufgabe erfolgt gemäß der Erfindung bei einer Geschirrspülmaschine gemäß dem Oberbegriff des Anspruchs 1 durch das kennzeichnende Merkmal des Anspruchs 1 und bei einem Verfahren zum Betreiben der Geschirrspülmaschine gemäß dem Oberbegriff des Anspruchs 6 durch die kennzeichnenden Merkmale des Anspruchs 6 und/oder des Anspruchs 10.

Dadurch, daß bei einer Geschirrspülmaschine mit wenigstens einem Geschirrkorb, welcher mit zu reinigendem Spülgut beladbar ist, und mit mindestens zwei Sprüheinrichtungen, die während eines Spülprogrammes gesondert mit Spülflüssigkeit versorgbar sind, wobei eine ausschließliche Versorgung einer Teilmenge der Sprüheinrichtungen während des Spülprogrammes einstellbar ist, wenigstens ein Sensor vorgesehen ist, durch den eine Beladung eines Geschirrkorbes erkennbar ist, ist eine solche Geschirrspülmaschine geschaffen, bei der bei einer vereinfachten Bedienung derselben eine Fehlbedienung vermieden ist. Wird beispielsweise durch den oder die Sensoren erkannt, daß von zwei vorliegenden Geschirrkörben nur einer beladen ist, während der andere unbeladen ist, so kann gegebenenfalls nur eine dem beladenen Geschirrkorb zugeordnete Sprüheinrichtung mit Spülflüssigkeit versorgt werden, während eine oder mehrere weitere Sprüheinrichtungen, die ausschließlich oder überwiegend dem unbeladenen Geschirrkorb zugeordnet ist bzw. sind, von einer Zufuhr von Spülflüssigkeit ausgeschlossen ist bzw. sind.

Vorzugsweise ist der wenigstens eine Sensor ein Gewichtssensor, der ein vorliegendes Gewicht des Geschirrkorbes ermittelt, wobei der ermittelte Wert durch ein eingebrachtes Spülgut erhöht sein kann. Um den Zustand der Beladung des Geschirrkorbes besonders gut ermitteln zu können, ist es günstig, mehrere Sensoren an verschiedenen, voneinander beabstandeten Stellen des Geschirrkorbes anzuordnen. Auf diese Weise ist es nicht nur möglich, zu erkennen, ob der Geschirrkorb überhaupt beladen ist, es ist darüber hinaus auch die Verteilung der Beladung im Geschirrkorb erkennbar.

In einer besonderen Ausgestaltung der Erfindung ist in den Eckbereichen eines beispielsweise rechteckig ausgestalteten Geschirrkorbes jeweils ein Gewichtssensor angeordnet. Abhängig von der so ermittelten Gewichtsverteilung des Geschirrkorbes inklusive seiner Beladung können dann Sprühparameter einstellbar sein. So kann beispielsweise bei einer gleichmäßigen Beladung des Geschirrkorbes mit nur leichten Spülgutteilen ein niedrigerer Sprühdruck eingestellt werden, so daß diese Spülgutteile während des Spülvorganges durch die Spülflüssigkeit nicht in ihrer Lage verändert werden. Falls in einer Geschirrspülmaschine die Sprüheinrichtung als rotierender Sprüharm ausgestaltet und die jeweilige Stellung des Sprüharms detektierbar ist, so kann der Sprühdruck in dieser Geschirrspülmaschine lageabhängig einstellbar sein. Wenn beispielsweise eine ungleichmäßige Verteilung des Spülgutes im Geschirrkorb ermittelt wird, so daß ganze Bereiche des Geschirrkorbes unbeladen sind, so kann der Sprühdruck reduziert eingestellt oder gleich Null sein, wenn der rotierende Sprüharm diese Stellen überstreicht.

Eine weitere Weiterbildung der Erfindung sieht bei einem Erkennen einer nur geringfügigen Beladung zweier übereinander angeordneter Geschirrkörbe eine ausschließliche Versorgung einer unterhalb des unteren Geschirrkorbes angeordneten Sprüheinrichtung vor. Die wenigen im unteren Geschirrkorb angeordneten Spülgutteile beeinflussen die Sprühstrahlen der unteren Sprüheinrichtung nur geringfügig, so daß auch eine Reinigung der Spülgutteile, die im oberen Geschirrkorb angeordnet sind, sichergestellt ist.

Um eine Bedienperson auf eine nur geringfügige Beladung in einer Geschirrspülmaschine aufmerksam zu machen, kann eine Anzeigeeinrichtung vorgesehen sein, die auf diesen Beladungszustand aufmerksam macht. Der Betrieb einer Geschirrspülmaschine mit einer geringen Beladung hat einen schlechten Wirkungsgrad des Spülbetriebes zur Folge. Pro Beladungseinheit, welche bei einer Geschirrspülmaschine üblicherweise in Maßgedecken angegeben wird, ist nämlich im Verleich zu einer Vollbeladung bei einer geringfügigen Beladung ein wesentlich höherer Energie- und Wasserverbrauch zu verzeichnen. Durch die Anzeige wird die Bedienperson darauf aufmerksam gemacht, daß sie im Begriff ist, ihre Geschirrspülmaschine mit einem schlechten Wirkungsgrad zu betreiben. Dann kann entschieden werden, daß dies auch beabsichtigt ist, oder ein eingestellter Programmablauf kann unterbrochen oder abgebrochen werden, bis ausreichend Geschirr eingebracht worden ist. Wird die Beladungserkennung von einem Gewichtssensor vorgenommen, so kann der Hinweis auf die zu geringe Beladung bereits vor einem ersten Wasserzulauf erfolgen. Die Anzeigevorrichtung kann ein akustisches oder optisches Signal abgeben. Insbesondere ist die Anzeigevorrichtung ein Display oder ein Bildschirm, das oder der einen entsprechenden Text ausgibt.

Die Erfindung wird anhand der Zeichnungen eines Ausführungsbeispiels im Folgenden näher erläutert.

Dabei zeigen:

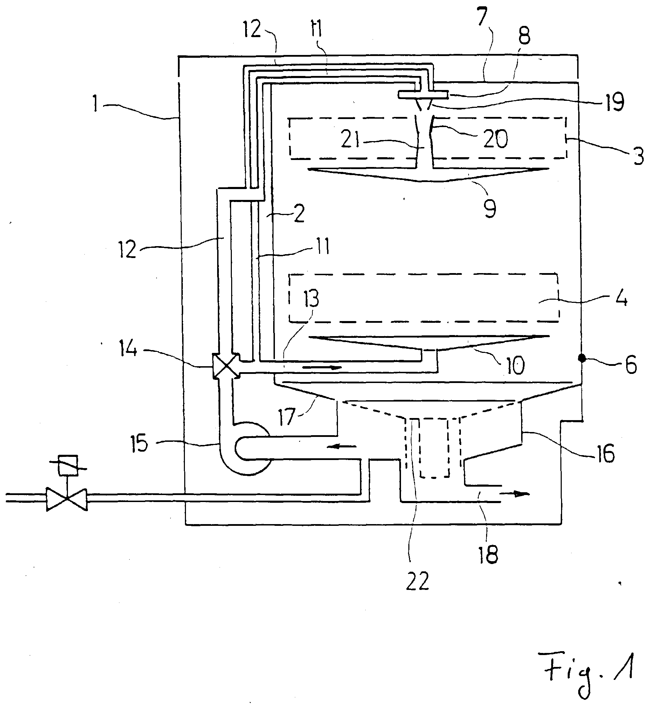

- Fig. 1: eine Prinzipskizze einer Geschirrspülmaschine in der Seitenansicht; und

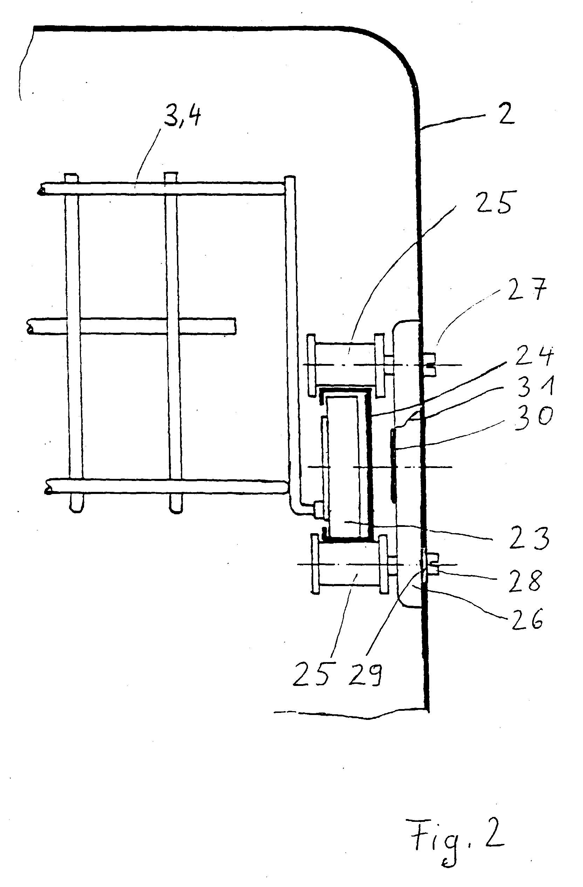

- Fig. 2: eine Einzeldarstellung einer Lagerung eines Geschirrkorbes.

Im Gerätegehäuse 1 einer Geschirrspülmaschine befindet sich ein Spülbehälter 2, in dem in unterschiedlichen Höhenebenen ein oberer Geschirrkorb 3 und ein unterer Geschirrkorb 4 horizontal verschiebbar gelagert sind. Der Zugang zum Innenraum des Spülbehälters 2 erfolgt über eine frontseitige Tür 5, die an ihrer Unterseite um eine waagrecht verlaufende Achse 6 schwenkbar gelagert ist. Unmittelbar unterhalb der Deckenwand 7 des Spülbehälters 2 befindet sich eine oberste Sprühvorrichtung 8, die somit oberhalb des oberen Geschirrkorbes 3 angeordnet und für das Besprühen des in den Geschirrkörben 3, 4 angeordneten Spülgutes von oben dient. Unmittelbar unter dem oberen Geschirrkorb 3 befindet sich eine mittlere Sprühvorrichtung 9, die zumindest nach oben gerichtet Sprühdüsen aufweist und zum Besprühen des Spülgutes im Geschirrkorb 3 von unten dient. Außerdem befindet sich unterhalb des unteren Geschirrkorbes 4 eine unterste Sprühvorrichtung 10 mit nach oben gerichteten Sprüh-düsen. Die Sprühvorrichtungen 8, 9 und 10 sind vorzugsweise drehbar angeordnete, zweiflügelige Sprüharme, die über Rohrleitungen 11, 12 bzw. 13 an ein Umsteuerventil 14 angeschlossen sind. Das Umsteuerventil 14 wird von einer Umwälzpumpe 15 gespeist, die Spülflüssigkeit aus einer Ablaufwanne 16 absaugt. Die in eine Öffnung des Spülbehälterbodens 17 eingesetzte Ablaufwanne 16 ist mit einer Siebanordnung 22 abgedeckt und weist einen Entleerungsstutzen 18 auf, der zu einer nicht dargestellten Entleerungspumpe führt.

Die oberste und die unterste Sprühvorrichtung 8, 10 sind unmittelbar über Drehverbindungen an ihre zugehörigen Rohrleitungen 8 bzw. 13 angeschlossen. Dagegen ist in den Strömungsweg der mittleren Sprühvorrichtung 9 eine Freistrahldüsenanordnung eingeschaltet, die aus einer mit dem Spülbehälter mechanisch verbundenen Freistrahldüse 19 und einem mit dem oberen Geschirrkorb 3 verbundenen Fangdüse 20 besteht. Die mit axialem Abstand von der Freistrahldüse 19 angeordnete Fangdüse 20 speist über ein Lagerrohr 21 die mittlere Sprühvorrichtung 9. Die Freistrahldüse 19 wird von der zugehörigen Rohrleitung 12 gespeist. Dabei verlaufen die Rohrleitungen 11, 12 für die oberste und die mittlere Sprühvorrichtung 8, 9 vor allem im Bereich der Durchführung durch die Deckenwand 7 konzentrisch zueinander, so daß nur eine Abdichtungsanordnung vorhanden sein muß. Vorliegend umschließt das Rohr 12 die Rohrleitung für die oberste Sprühvorrichtung 8. Die Rohrleitung 11 für die oberste Sprühvorrichtung 8 zweigt von der Rohrleitung 13 für die untere Sprühvorrichtung 10 ab. Für die Umsteuervorrichtung 14 wird somit entweder nur über die Rohrleitung 12 die mittlere Sprühvorrichtung 9 oder nach einer Umschaltung die oberste und die unterste Sprühvorrichtung 8, 10 bei laufender Umwälzpumpe mit Spülflüssigkeit beaufschlagt. Die Umsteuervorrichtung 14 kann so eingestellt werden, daß sie entweder ausschließlich die Rohrleitungen 11 und 13 mit Spülflüssigkeit versorgt, oder statt dessen ausschließlich die Rohrleitung 12 bedient. Die Umsteuervorrichtung 14 kann jedoch auch so angesteuert werden, daß alle drei Rohrleitungen 11, 12, 13 freigegeben sind.

Die Geschirrkörbe 3, 4 sind horizontal verschiebbar im Spülbehälter 2 angeordnet. Dazu sind an jedem Geschirrkorb 3, 4 beidseitig jeweils zwei Rollen 23 angekoppelt. Die Rollen 23 auf jeder Seite des Geschirrkorbes 3, 4 laufen in jeweils einer Korbführungsschiene 24. Die Korbführungsschiene 24 ist ihrerseits ebenfalls rollend an der Spülbehälterwand angekoppelt. Dazu wird jede längs einer Behälterseitenwand verlaufende Korbführungsschiene 24 von wenigstens zwei Rollenpaaren 25 getragen. Die Rollenpaare 25 sind über eine Tragplatte 26 am Spülbehälter 2 befestigt. Die Befestigung der Tragplatte 26 erfolgt über eine starren Schraubverbindung 27 sowie über eine in einem Langloch 29 geführte Gleitverbindung 28. Die Tragplatte 26 besteht aus einem hartelastischen Material, so daß sie sich bei einer Beladung des Geschirrkorbes 3, 4 geringfügig dehnt. Die maximale Dehnung der Tragplatte 26 ist so bemessen, daß selbst bei einer Beladung des Geschirrkorbes 3, 4 mit sehr schwerem Spülgut die Korbführungsschiene 24 noch von der oberen Rolle des Rollenpaares 25 gehalten ist.

An der Tragplatte 26 ist ein Dehnungsmeßstreifen 30 angekoppelt. Der Dehnungsmeßstreifen 30 mißt die Längenänderung der Tragplatte 26 bei einer Beladung des Geschirrkorbes 3, 4. Der Dehnungsmeßstreifen 30 ist mittels einer Zuleitung 31 an eine Auswerteeinheit angeschlossen, welche einen von der Dehnung der Tragplatte 26 abhängigen Widerstand des Dehnungsmeßstreifens 30 ermittelt. Jede Korbführungsschiene 24 wird von jeweils zwei Rollenpaaren 25 gehalten, wobei jedes Rollenpaar 25 durch die beschriebene Anordnung mittels einer Tragplatte 26 an einer Spülbehälterwand angekoppelt ist. Somit sind jeder Korbführungsschiene 24 jeweils horizontal beabstandet zwei Dehnungsmeßstreifen 30 zugeordnet. Auf diese Weise ist es möglich, eine unterschiedliche Beladung der Korbseite im vorderen und hinteren Bereich festzustellen. Ebenso ergibt sich eine Möglichkeit zur Erfassung einer unterschiedlichen Beladungsdichte der linken und rechten Korbseite, da jede Korbseite ein Paar von Dehnungsmeßstreifen 30 aufweist.

## Patentansprüche

1. Geschirrspülmaschine mit wenigstens einem Geschirrkorb, welcher mit zu reinigendem Spülgut beladbar ist, und mit mindestens zwei Sprüheinrichungen, die während eines Spülprogrammes gesondert mit Spülflüssigkeit versorgbar sind, wobei eine ausschließliche Versorgung einer Teilmenge der Sprüheinrichtungen während des Spülprogrammes einstellbar ist, dadurch gekennzeichnet, daß wenigstens ein Sensor (30) vorgesehen ist, durch den eine Beladung eines Geschirrkorbes (3, 4) erkennbar ist.

2. Geschirrspülmaschine nach Anspruch 1, dadurch gekennzeichnet, daß der Sensor (30) ein Gewichtssensor ist.

3. Geschirrspülmaschine nach Anspruch 1 oder 2, dadurch gekennzeichnet, daß mehrere Sensoren (30) an verschiedenen, voneinander beabstandeten Stellen des Geschirrkorbes (3, 4) angeordnet sind.

4. Geschirrspülmaschine nach Anspruch 3, dadurch gekennzeichnet, daß in den Eckbereichen des Geschirrkorbes (3, 4) jeweils ein Sensor (30) angeordnet ist und abhängig von der Gewichtverteilung der Beladung Sprühparameter einstellbar sind.

5. Geschirrspülmaschine nach einem der Ansprüche 1 bis 4, dadurch gekennzeichnet, daß bei einem Erkennen einer nur geringfügigen Beladung zweier übereinander angeordneter Geschirrkörbe (3, 4) eine ausschließliche Versorgung einer unterhalb des unteren Geschirrkorbes (4) angeordneten Sprüheinrichtung (10) einstellbar ist.

6. Verfahren zum Betreiben einer Geschirrspülmaschine mit wenigstens einem Geschirrkorb, welcher mit zu reinigendem Spülgut beladbar ist, und mit mindestens zwei Sprüheinrichtungen, die während eines Spülprogramms gesondert mit Spülflüssigkeit versorgt werden, wobei eine ausschließliche Versorgung einer Teilmenge der Sprüheinrichtungen für den Ablauf des Spülprogrammes eingestellt werden kann, dadurch gekennzeichnet, daß wenigstens ein Sensor (30) eine Beladung eines Geschirrkorbes (3,4) erkennt und die Teilmenge der Sprüheinrichtungen (8,9,10), die einem beladenen Geschirrkorb (3,4) zugeordnet sind, zur ausschließlichen Versorgung mit Spülflüssigkeit bestimmt.

7. Verfahren nach Anspruch 6, dadurch gekennzeichnet, daß der Sensor (30) das Gewicht des Geschirrkorbes (3,4) erfaßt.

8. Verfahren nach Anspruch 7, dadurch gekennzeichnet, daß durch den Sensor (30) oder durch mehrere, an verschiedenen Orten am Geschirrkorb (3,4) angeordnete Sensoren (30) eine Gewichtsverteilung im Geschirrkorb (3,4) erkannt wird und abhängig von der Gewichtsverteilung Sprühparameter eingestellt werden.

9. Verfahren nach einem der Ansprüche 6 bis 8, dadurch gekennzeichnet, daß bei zwei übereinander angeordneten Geschirrkörben (3,4) ausschließlich eine unterhalb des unteren Geschirrkorbes (4) angeordnete Sprüheinrichtung (10) versorgt wird, wenn beide Geschirrkörbe (3,4) nur geringfügig beladen sind.

10. Verfahren zum Betreiben einer Geschirrspülmaschine mit wenigstens einem Geschirrkorb, welcher mit zu reinigendem Spülgut beladbar ist, insbesondere nach einem der Ansprüche 6 bis 9, dadurch gekennzeichnet, daß wenigstens ein Sensor (30) eine Beladung des Geschirrkorbes (3,4) erkennt und im Falle einer geringfügige Beladung eine Anzeigevorrichtung diesen Beladungszustand anzeigt.
